# EUROPEAN PATENT SPECIFICATION

(11) **EP 3 193 052 B1**
(45) Date of publication and mention of the grant of the patent: **08.05.2019**
(21) Application number: 16151416.1
(22) Date of filing: 15.01.2016
(51) Int. Cl.: F16K 1/52, F24D 19/10, F16K 1/42

(54) **VALVE WITH VALVE SEAT MEMBER**
VENTIL MIT VENTILSITZELEMENT
SOUPAPE AVEC ÉLÉMENT DE SIÈGE DE SOUPAPE

(43) Date of publication of application: 19.07.2017
(73) Proprietor: Danfoss A/S, 6430 Nordborg (DK)
(72) Inventor: Clausen, Anders Østergaard, 8680 Ry (DK)
(74) Representative: Keil & Schaafhausen Patent- und Rechtsanwälte PartGmbB

(56) References cited:
- EP-A2- 1 154 176
- DE-U1-202012 003 702

## Description

The invention relates to a valve, in particular a radiator valve, comprising an inlet, an outlet, a valve seat, a valve element, a valve body and a housing, wherein the valve element is displaceable along an axis towards the valve seat to throttle or stop a fluid flow through the valve seat, wherein the valve seat is arranged in a valve seat member, wherein the valve seat member is releasably connected to the valve body.

Such a valve is known, for example, from EP 1 154 176 A2. The valve seat member is in form of an insert part which is fixed to a valve housing by means of a retaining ring or which is screwed into the valve housing.

DE 20 2012 003 702 U1 shows a further valve having an insert on which a valve seat is formed.

Valves of this kind are for example used to control the flow of a heating or cooling fluid for example into a radiator or a heating or cooling circuit.

In valves of this kind the valve seat is usually part of the housing. This has the disadvantage that it is difficult to change the flow characteristics of the valve seat in a given valve. Furthermore, maintenance of the valve can be difficult, since the valve seat is not easily accessible.

The task of the present invention is therefore to provide a valve in which the flow characteristics can be changed more easily and that allows for a simplified maintenance.

According to the present invention the above task is solved in that the valve seat member is releasable from the valve body by a displacement of the valve seat member relative to the valve body in a direction perpendicular to the axis.

This has the advantage that the flow characteristics of the valve seat can be easily adjusted by replacing the valve seat member and thus the valve seat. It is no longer necessary to replace the whole valve housing. Furthermore, the valve seat is easier to access during maintenance, for example by removing the valve body together with the valve seat member from the valve housing. Another advantage is that the valve seat size can be chosen relatively late in the production process which increases the production flexibility. Furthermore less machining is required to manufacture the valve and in particular the housing. The valve body can for example comprise all parts of the valve except the valve housing and the valve seat member. The valve seat member can preferably only be released from the valve body when the valve body is removed from the housing, e. g. during maintenance. Preferably, the valve seat member is made of a plastic material. Some or all parts of the valve body can be made from a plastic material. Preferably the valve seat member is releasable from the presetting member by a displacement of the valve seat member relative to the presetting member in a direction perpendicular to the axis. This has the advantage that the valve seat member will not be accidentally loosened or released for example by a rotation or axial displacement of the valve seat member inside the valve. Furthermore, the attachment and the release of valve seat members to the valve body or the presetting member are comparatively simple.

In a preferred embodiment the valve body comprises a presetting member, wherein the valve seat member is releasably connected to an axial end part of the presetting member. The axial end part can for example comprise a chamber in which the valve element is accommodated. The presetting member preferably includes a presetting function which can change the maximum fluid flow through the valve. This can for example be achieved by a rotation of the presetting member around the axis or by a change of the maximum distance between the valve element and the valve seat.

It is preferred if the valve body comprises a cutout in a circumferential direction around the axis, wherein the valve seat member can be introduced into and released from the valve body through the cutout. The cutout may be arranged in the presetting member. The cutout can on the one hand allow to connect and release the valve seat member from the valve body, and on the other hand allow an opening between the valve seat member and the valve body to be formed through which fluid can flow from the valve seat to the outlet.

In a preferred embodiment the valve seat member comprises a circumferential sealing groove that accommodates a sealing ring. This has the advantage that in case the sealing between the vale seat member and the member it is arranged in can also be replaced easily if necessary by replacing the valve seat member.

In a preferred embodiment the valve seat member comprises a flow guiding surface, wherein the flow guiding surface is inclined relative to the axis. Such a flow guiding surface can for example reduce pressure losses due to turbulent flow of fluid from the valve seat to the outlet. The flow guiding surface is preferably arranged in flow direction between the valve seat and the inlet. The flow guiding surface can preferably be arranged neighboring an opening and/or an aperture through which the fluid flow from the valve seat to the outlet can be guided and restricted for example by a change of presetting.

In another preferred embodiment the valve set member or the valve body comprises a snap-in groove to facilitate the releasable connection of the valve seat member to the valve body. A snap-in groove allows a relatively simple mechanical connection of the valve seat member to the valve body.

It is preferred if the valve set member or the valve body comprises a snap-in rim to facilitate the releasable connection of the valve seat member to the valve body. It is preferred if the valve seat member comprises the snap in groove and the valve body comprises a snap in rim.

It is preferred if the valve comprises an insert arranged in the valve housing, wherein the valve seat member is arranged in the insert rotatable around the axis. The valve seat member can be guided inside the insert. Furthermore, the use of an insert simplifies the construction of the housing since the insert can separate the inlet from the outlet. Consequently, the inner structure of the housing can be formed relatively simple with a limited number of bores. The insert has preferably a cylinder-like shape. This allows to rotate and axially displace the valve seat member and parts of the valve body inside the insert.

It is preferred if the effective flow cross section from the valve seat to the outlet is adjustable by rotating the valve seat member relative to the insert. In case the valve seat member is releasably connected to the presetting member this can be facilitated by rotating the presetting member for example with the help of a presetting handle.

It is preferred if the insert comprises an aperture in a tangential direction perpendicular to the axis. The aperture can allow a fluid flow from the valve seat to the outlet.

It is furthermore preferred if the valve seat member and the valve body form an opening in a tangential direction perpendicular to the axis, wherein the effective flow cross section from the valve seat to the outlet is adjustable by changing the alignment of the aperture to the opening. The alignment of the aperture to the opening can for example be changed by rotating the valve seat member relative to the insert or by displacing the valve seat member along the axis relative to the insert.

Preferably the valve seat member comprises a flow limitation in flow direction between the inlet and the valve seat. The flow limitation can for example be an annular ledge protruding from the valve seat member radially inwardly. Radially here denotes the directions perpendicular to the axis. Preferably the flow cross section through the valve seat member at the axial position of the flow limitation is lower than at the axial position of the valve seat.

It is preferred if the valve seat member is displaceable along the axis relative to the housing. The valve seat member may be displaceable by a presetting mechanism. An axial displacement of the valve seat member may also be possible due to thermal expansion in the valve body. This can for example allow to increase the precision of the temperature compensation of a thermostat actuator connected to the valve. Such a counter-compensation is advantageous since the temperature of the fluid flowing through the valve warms the valve housing, the valve body as well as any attached thermostatic actuator. The thermostatic actuator will thus be heated to a temperature above the room temperature and consequently readjust the opening degree of the valve by a too large amount. This effect can be corrected if the valve seat member is axially displaceable by a thermal elongation of the valve body increasing the distance between the valve seat and the valve element. By displacing the valve seat member along the axis the distance of the valve seat to the valve element can be adjusted whereby the maximum opening degree of the valve can be changed.

The above task is also solved by a valve seat member for a valve according to any of the above embodiments.

Preferred embodiments of the invention are now described with reference to the figures, wherein:
- Fig. 1: shows a cut view of a first embodiment of a valve according to the invention,
- Fig. 2: shows an external view of a valve according to the first embodiment without the housing and the insert,
- Fig. 3: shows the valve according to the first embodiment with a detached valve seat member,
- Fig. 4: shows a valve seat member as used in the first embodiment,
- Fig. 5: shows a valve seat member as used in the second embodiment,
- Fig. 6: shows a cut view of a second embodiment of a valve according to the invention, and
- Fig. 7: shows an enlarged cut view of the second embodiment of a valve according to the invention.

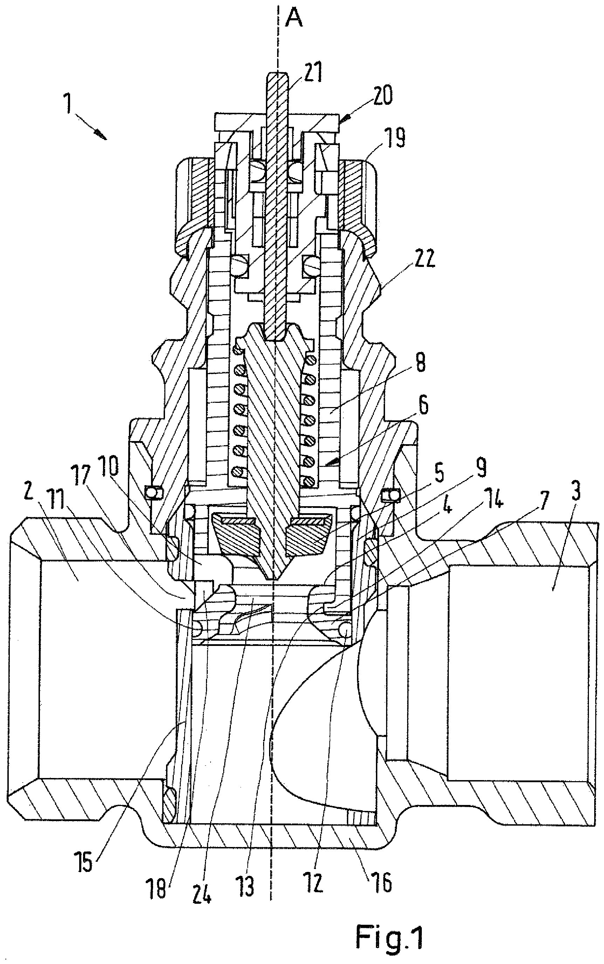

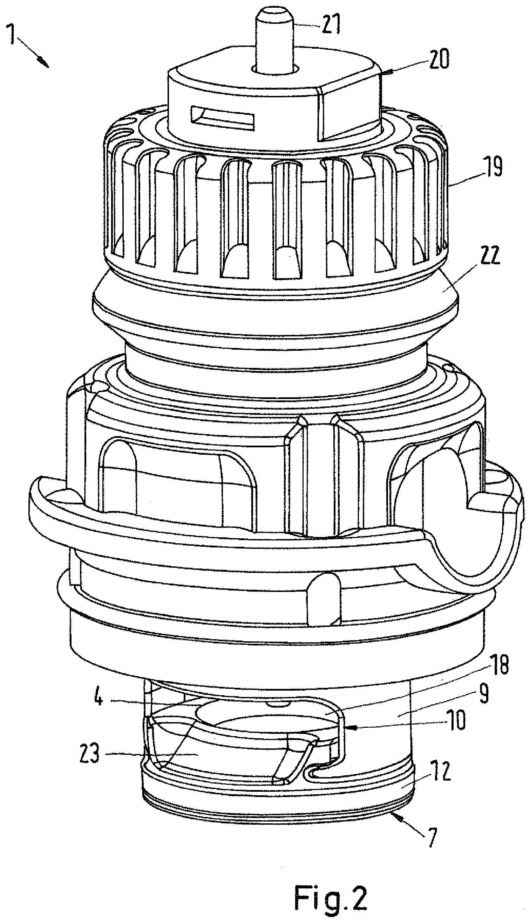

Fig. 1 shows a first embodiment of a valve 1 according to the invention. Fig. 2 to 4 show parts of the valve 1 according to the first embodiment. The valve 1 comprises a valve housing 16 in which an inlet 3 as well as an outlet 2 are arranged. The valve 1 comprises a valve body 6 that is fixed to the housing 16. The valve body 6 comprises a presetting member 8 as well as a valve top 22. The valve top 22 holds the presetting member 8 in the housing 16.

The valve 1 furthermore comprises a valve seat 4 as well as a valve element 5. The valve element 5 is displaceable along an axis A towards the valve seat 4 to throttle or stop a fluid flow through the valve seat 4. The valve seat 4 is arranged in a valve seat member 7. The valve seat member 7 is releasably connected to the valve body 6. In the given embodiment the valve seat member 7 releasably connected to an axial end part 9 of the presetting member 8. The axial end part 9 as well as the valve seat member 7 are arranged in an insert 15. The insert 15 is arranged in the housing 16 and separates the inlet 3 and the outlet 2.

The valve seat member 7 comprises a sealing groove 11 in which a sealing ring 12 is arranged. The sealing ring 12 provides a sealing between the insert 15 and the valve seat member 7. The valve seat member 7 furthermore comprises a snap-in groove 13 to facilitate a releasable connection of the valve seat member 7 and the valve body 6. At the same time the valve body 6 comprises a snap-in rim 14 that engages in the snap-in groove 13 to facilitate the releasable connection of the valve seat member 7 to the valve body 6. The valve seat member 7 is releasable from the valve body 6 by a displacement of the valve seat member 7 relative to the valve body 6 in a direction perpendicular to the axis A. Such a perpendicular motion of the valve seat member 7 is only possible when the valve body 6 together with the valve seat member 7 are removed from the housing 16. When the valve body 6 and the valve seat member 7 are arranged in the housing 16 and in particular in the insert 15 any displacement of the valve seat member 7 perpendicular to the axis A is blocked by the insert 15.

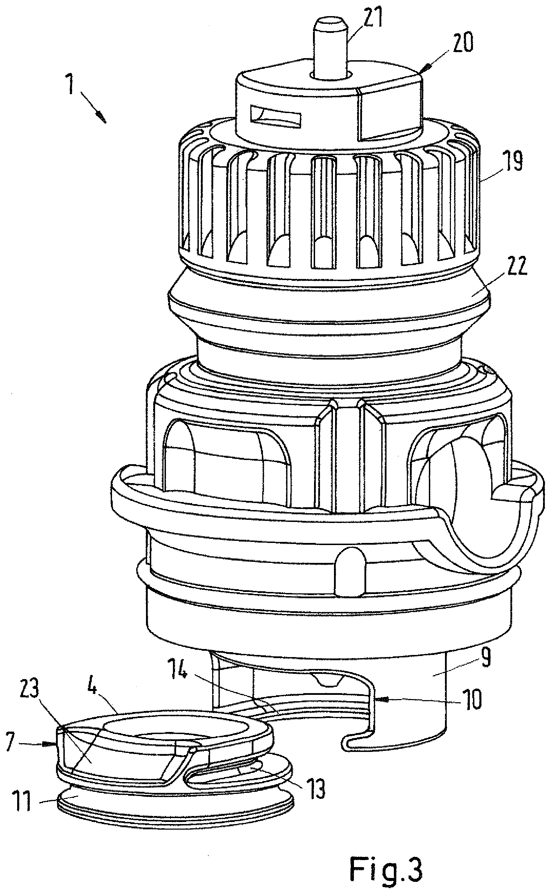

The valve body 6 and in particular the presetting member 8 comprises a cutout 10 in a circumferential direction around the axis A. The cutout 10 allows the valve seat member 7 to be introduced into and released from the presetting member 8 as can be seen in detail in Fig. 2 and 3. Fig. 2 and 3 again show the first embodiment of the valve one according to the invention without the housing 16 and the insert 15.

The valve 1 furthermore comprises a presetting mechanism. The presetting member 8 can be rotated using a presetting handle 19 to change the presetting of the valve 1. The valve seat member 7 and the axial end part 9 form an opening 18 in a tangential direction perpendicular to the axis A. The insert 15 comprises an aperture 17 adjacent to the opening 18. By rotating the valve seat member 7 and the presetting member 8 relative to the insert 15 the overlap of the aperture 17 and the opening 18 is changeable to adjust the effective flow cross section from the valve seat 4 to the outlet 2. The valve seat member 7 comprises a flow guiding surface 23 that is inclined relative to the axis A. Thereby the fluid flow from the valve seat 4 is guided through the aperture 17 and the opening 18 towards the outlet 2. Thereby pressure losses due to turbulence are reduced.

The valve 1 furthermore comprises a stuffing box 20 through which a pin 21 is guided. The pin 21 can be engaged by an actuator attached to the valve 1 to open or close the valve 1.

The axial position of the valve seat 4 is not necessarily fixed relative to the housing 16. For example, the presetting of the valve 1 may also be changed by axially displacing the valve seat member 7. Thereby, the effective flow cross section from the valve seat 4 to the outlet 2 may be changed due to a change in overlap between the aperture 17 and the opening 18.

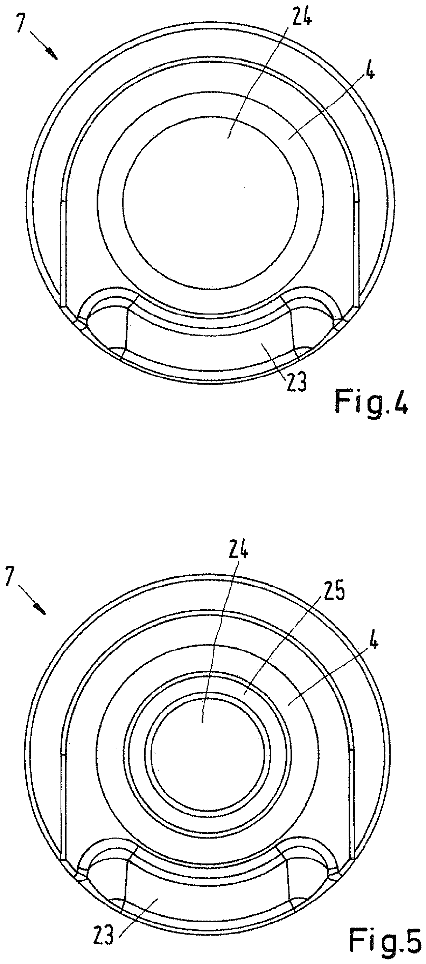

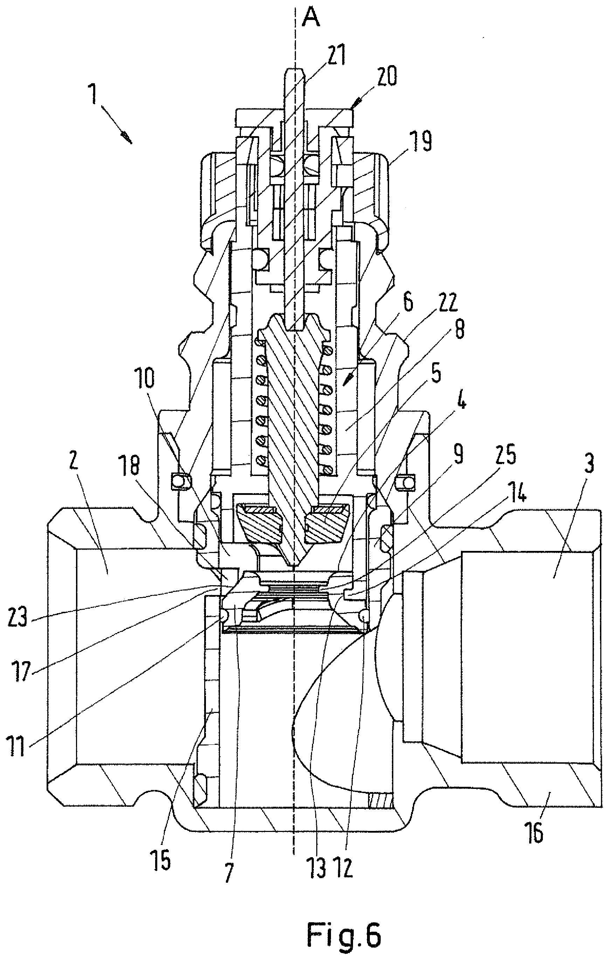

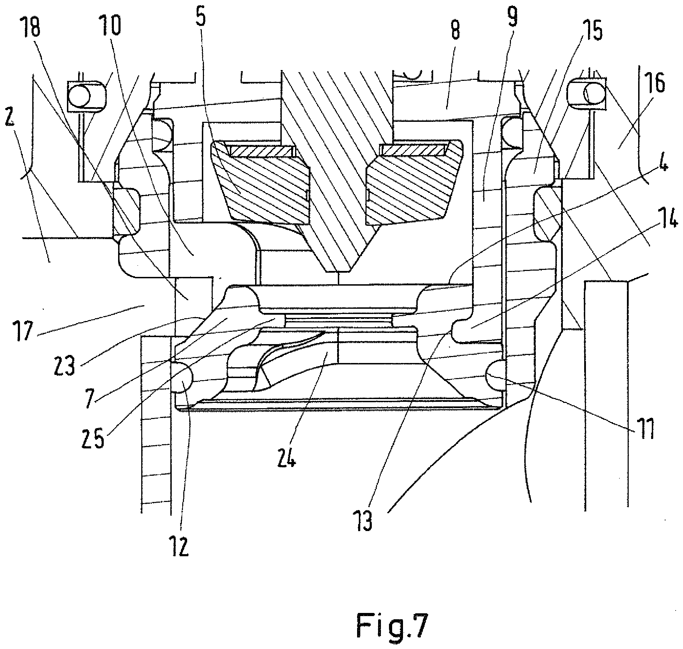

Fig. 4 and 5 show two different valve seat members 7. The valve seat member 7 according to Fig. 4 is used in the first embodiment as shown in Fig. 1 to 3. The valve seat member 7 according to Fig. 5 is part of the valve 1 according to the second embodiment as shown in Fig. 6 and 7.

Fig. 4 and 5 each show a top view of a valve seat member 7. The difference between the valve seat members 7 according to the first and second embodiment is that the valve seat member 7 as shown in Fig. 5 additionally comprises a flow limitation 25 in flow direction between the valve seat 4 and the outlet 3. The flow limitation 25 reduces the effective flow cross section through a valve seat channel 24 from the inlet 3 to the valve seat 4. This has the advantage that the same valve 1 may be used for different applications by simply replacing the valve seat member 7. For example, one may use the valve 1 for two radiators of different size by simply replacing the valve seat member 7.

Fig. 6 and 7 show the valve 1 according to the second embodiment of the invention. Corresponding features are denoted with the same reference signs as in the first embodiment according to Fig. 1 to 4. As discussed above the second embodiment uses a different valve seat member 7 compared to the first embodiment. The valve seat member 7 here comprises the flow limitation 25 in flow direction between the inlet 3 and the valve seat 4.

The enlarged view of the valve 1 shown in Fig. 7 shows the overlap of the aperture 17 and the opening 18 in more detail. Both the aperture 17 and the opening 18 have a limited extend in the tangential direction perpendicular to the axis A. By rotating the presetting member 8 relative to the insert 15 the overlap between the aperture 17 and the opening 18 can be changed whereby the maximum fluid flow through the valve 1 is also changed. One may even reduce the overlap of the aperture 17 and the opening 18 to zero whereby the fluid flow through the valve 1 is completely stopped irrespective of the relative position of the valve element 5 to the valve seat 4. This adds an additional functionality to the valve 1 that can be advantageous for example during maintenance of the valve.

## Claims

1. A valve (1) comprising an inlet (3) and outlet (2), a valve seat (4), a valve element (5), a valve body (6) and a housing (16), wherein the valve element (5) is displaceable along an axis (A) towards the valve seat (4) to throttle or stop a fluid flow through the valve seat (4), wherein the valve seat (4) is arranged in a valve seat member (7), and wherein the valve seat member (7) is releasably connected to the valve body (6), **characterized in that** the valve seat member (7) is releasable from the valve body (6) by a displacement of the valve seat member (7) relative to the valve body (6) in a direction perpendicular to the axis (A)

2. The valve according to claim 1, **characterized in that** the valve body (6) comprises a presetting member (8), wherein the valve seat member (7) is releasably connected to an axial end part (9) of the presetting member (8).

3. The valve according to claim 1 or 2, **characterized in that** the valve body (6) comprises a cutout (10) in a circumferential direction around the axis (A), wherein the valve seat member (7) can be introduced into and released from the valve body (6) through the cutout (10).

4. The valve according to any of claims 1 to 3, **characterized in that** the valve seat member (7) comprises a circumferential sealing groove (11) that accommodates a sealing ring (12).

5. The valve according to any of claims 1 to 4, **characterized in that** the valve seat member (7) comprises a flow guiding surface (23), wherein the flow guiding surface (23) is inclined relative to the axis (A).

6. The valve according to any of claims 1 to 5, **characterized in that** the valve seat member (7) or the valve body (6) comprises a snap-in groove (13) to facilitate the releasable connection of the valve seat member (7) and the valve body (6).

7. The valve according to any of claims 1 to 6, **characterized in that** the valve seat member (7) or the valve body (6) comprises a snap-in rim (14) to facilitate the releasable connection of the valve seat member (7) and the valve body (6).

8. The valve according to any of claims 1 to 7, **characterized in that** the valve (1) comprises an insert (15) arranged in the valve housing (16), wherein the valve seat member (7) is arranged in the insert (15) rotatable around the axis (A).

9. The valve according to claim 8, **characterized in that** the effective flow cross section from the valve seat (4) to the outlet (2) is adjustable by rotating the valve seat member (7) relative to the insert (15).

10. The valve according to claim 8 or 9, **characterized in that** the insert (15) comprises an aperture (17) in a tangential direction perpendicular to the axis (A).

11. The valve according to claim 10, **characterized in that** the valve seat member (7) and the valve body (6) form an opening (18) in a tangential direction perpendicular to the axis (A), wherein the effective flow cross section from the valve seat (4) to the outlet (2) is adjustable by changing the alignment of the aperture (17) to the opening (18).

12. The valve according to any of claims 1 to 11, **characterized in that** the valve seat member (7) comprises a flow limitation (25) in flow direction between the inlet (3) and the valve seat (4).

13. The valve according to any of claims 1 to 12, **characterized in that** the valve seat member (7) is displaceable along the axis (A) relative to the housing (16).

## Patentansprüche

1. Ventil (1), umfassend einen Einlass (3) und Auslass (2), einen Ventilsitz (4), ein Ventilelement (5), einen Ventilkörper (6) und ein Gehäuse (16), wobei das Ventilelement (5) entlang einer Achse (A) in Richtung des Ventilsitzes (4) verschiebbar ist, um einen Fluidstrom durch den Ventilsitz (4) zu drosseln oder zu stoppen, wobei der Ventilsitz (4) in einem Ventilsitzelement (7) angeordnet ist und wobei das Ventilsitzelement (7) lösbar mit dem Ventilkörper (6) verbunden ist, **dadurch gekennzeichnet, dass** das Ventilsitzelement (7) vom Ventilkörper (6) lösbar ist durch eine Verschiebung des Ventilsitzelements (7) relativ zu dem Ventilkörper (6) in einer Richtung senkrecht zur Achse (A).

2. Ventil nach Anspruch 1, **dadurch gekennzeichnet, dass** der Ventilkörper (6) ein Voreinstellelement (8) umfasst, wobei das Ventilsitzelement (7) lösbar mit einem axialen Endteil (9) des Voreinstellelements (8) verbunden ist.

3. Ventil nach Anspruch 1 oder 2, **dadurch gekennzeichnet, dass** der Ventilkörper (6) einen Ausschnitt (10) in einer umlaufenden Richtung rund um die Achse (A) umfasst, wobei das Ventilsitzelement (7) durch den Ausschnitt (10) in den Ventilkörper (6) eingeführt und von diesem gelöst werden kann.

4. Ventil nach einem der Ansprüche 1 bis 3, **dadurch gekennzeichnet, dass** das Ventilsitzelement (7) eine umlaufende Dichtnut (11) umfasst, die einen Dichtungsring (12) aufnimmt.

5. Ventil nach einem der Ansprüche 1 bis 4, **dadurch gekennzeichnet, dass** das Ventilsitzelement (7) eine Strömungsleitfläche (23) umfasst, wobei die Strömungsleitfläche (23) relativ zur Achse (A) geneigt ist.

6. Ventil nach einem der Ansprüche 1 bis 5, **dadurch gekennzeichnet, dass** das Ventilsitzelement (7) oder der Ventilkörper (6) eine Einrastnut (13) umfasst, um die lösbare Verbindung des Ventilsitzelements (7) und des Ventilkörpers (6) zu ermöglichen.

7. Ventil nach einem der Ansprüche 1 bis 6, **dadurch gekennzeichnet, dass** das Ventilsitzelement (7) oder der Ventilkörper (6) einen Einrastrand (14) umfasst, um die lösbare Verbindung des Ventilsitzelements (7) und des Ventilkörpers (6) zu ermöglichen.

8. Ventil nach einem der Ansprüche 1 bis 7, **dadurch gekennzeichnet, dass** das Ventil (1) einen Einsatz (15) umfasst, der in dem Ventilgehäuse (16) angeordnet ist, wobei das Ventilsitzelement (7) in dem Einsatz (15) drehbar um die Achse (A) angeordnet ist.

9. Ventil nach Anspruch 8, **dadurch gekennzeichnet, dass** der effektive Strömungsquerschnitt vom Ventilsitz (4) zum Auslass (2) durch Drehen des Ventilsitzelements (7) relativ zum Einsatz (15) einstellbar ist.

10. Ventil nach Anspruch 8 oder 9, **dadurch gekennzeichnet, dass** der Einsatz (15) eine Öffnung (17) in einer tangentialen Richtung senkrecht zur Achse (A) umfasst.

11. Ventil nach Anspruch 10, **dadurch gekennzeichnet, dass** das Ventilsitzelement (7) und der Ventilkörper (6) eine Öffnung (18) in einer tangentialen Richtung senkrecht zur Achse (A) bilden, wobei der effektive Strömungsquerschnitt vom Ventilsitz (4) zum Auslass (2) durch Ändern der Ausrichtung der Öffnung (17) zur Öffnung (18) einstellbar ist.

12. Ventil nach einem der Ansprüche 1 bis 11, **dadurch gekennzeichnet, dass** das Ventilsitzelement (7) eine Strömungsbegrenzung (25) in Strömungsrichtung zwischen dem Einlass (3) und dem Ventilsitz (4) umfasst.

13. Ventil nach einem der Ansprüche 1 bis 12, **dadurch gekennzeichnet, dass** das Ventilsitzelement (7) entlang der Achse (A) relativ zum Gehäuse (16) verschiebbar ist.

## Revendications

1. Soupape (1) comprenant une entrée (3) et une sortie (2), un siège de soupape (4), un élément de soupape (5), un corps de soupape (6) et un carter (16), l'élément de soupape (5) étant déplaçable le long d'un axe (A) en direction du siège de soupape (4) pour étrangler ou bloquer un écoulement de fluide à travers le siège de soupape (4), le siège de soupape (4) étant agencé dans un organe de siège de soupape (7), et l'organe de siège de soupape (7) étant relié de manière amovible au corps de soupape (6), **caractérisée en ce que** l'organe de siège de soupape (7) peut être libéré du corps de soupape (6) par un déplacement de l'organe de siège de soupape (7) par rapport au corps de soupape (6) dans une direction perpendiculaire à l'axe (A).

2. Soupape selon la revendication 1, **caractérisée en ce que** le corps de soupape (6) comprend un organe de pré-réglage (8), l'organe de siège de soupape (7) étant relié de manière amovible à une partie d'extrémité axiale (9) de l'organe de pré-réglage (8) .

3. Soupape selon la revendication 1 ou 2, **caractérisée en ce que** le corps de soupape (6) comprend une découpe (10) dans une direction circonférentielle autour de l'axe (A), l'organe de siège de soupape (7) pouvant être introduit dans le corps de soupape (6), et libéré de celui-ci, à travers la découpe (10) .

4. Soupape selon l'une quelconque des revendications 1 à 3, **caractérisée en ce que** l'organe de siège de soupape (7) comprend une rainure d'étanchéité circonférentielle (11) qui loge une bague d'étanchéité (12).

5. Soupape selon l'une quelconque des revendications 1 à 4, **caractérisée en ce que** l'organe de siège de soupape (7) comprend une surface de guidage d'écoulement (23), la surface de guidage d'écoulement (23) étant inclinée par rapport à l'axe (A) .

6. Soupape selon l'une quelconque des revendications 1 à 5, **caractérisée en ce que** l'organe de siège de soupape (7) ou le corps de soupape (6) comprend une rainure d'encliquetage (13) pour faciliter la liaison libérable de l'organe de siège de soupape (7) et du corps de soupape (6).

7. Soupape selon l'une quelconque des revendications 1 à 6, **caractérisée en ce que** l'organe de siège de soupape (7) ou le corps de soupape (6) comprend un rebord d'encliquetage (14) pour faciliter la liaison libérable de l'organe de siège de soupape (7) et du corps de soupape (6).

8. Soupape selon l'une quelconque des revendications 1 à 7, **caractérisée en ce que** la soupape (1) comprend un insert (15) agencé dans le carter de soupape (16), l'organe de siège de soupape (7) étant agencé dans l'insert (15) de manière rotative autour de l'axe (A).

9. Soupape selon la revendication 8, **caractérisée en ce que** la section transversale d'écoulement effective du siège de soupape (4) à la sortie (2) peut être ajustée par rotation de l'organe de siège de soupape (7) par rapport à l'insert (15).

10. Soupape selon la revendication 8 ou 9, **caractérisée en ce que** l'insert (15) comprend une ouverture (17) dans une direction tangentielle perpendiculaire à l'axe (A).

11. Soupape selon la revendication 10, **caractérisée en ce que** l'organe de siège de soupape (7) et le corps de soupape (6) forment un orifice (18) dans une direction tangentielle perpendiculaire à l'axe (A), la section transversale d'écoulement effective du siège de soupape (4) à la sortie (2) pouvant être ajustée par modification de l'alignement de l'ouverture (17) par rapport à l'orifice (18).

12. Soupape selon l'une quelconque des revendications 1 à 11, **caractérisée en ce que** l'organe de siège de soupape (7) comprend une limitation d'écoulement (25) dans le sens d'écoulement entre l'entrée (3) et le siège de soupape (4).

13. Soupape selon l'une quelconque des revendications 1 à 12, **caractérisée en ce que** l'organe de siège de soupape (7) est déplaçable le long de l'axe (A) par rapport au carter (16).
